Europäisches Patentamt

**European Patent Office**

**Office européen des brevets**

(11) Publication number: **0 163 496**
**A2**

(12) **EUROPEAN PATENT APPLICATION**

(21) Application number: **85303667.1**

(22) Date of filing: **23.05.85**

(51) Int. Cl.⁴: **A 23 G 1/00**
**A 21 D 13/08**

(30) Priority: **30.05.84 US 615192**

(43) Date of publication of application:
**04.12.85 Bulletin 85/49**

(84) Designated Contracting States:
**AT BE CH DE FR GB IT LI LU NL SE**

(71) Applicant: **NABISCO BRANDS INC.**
**Nabisco Brands Plaza**
**Parsippany New Jersey 07054(US)**

(72) Inventor: **Pelloso, Turiddu A.**
**44 Jackson Drive Danbury**
**Connecticut 06810(US)**

(72) Inventor: **Chrysam, Michael M.**
**Rt. 4, Wiley Lane Newtown**
**Connecticut 06470(US)**

(72) Inventor: **Bosco, Peter M.**
**4 Bonny Road Brookfield Center**
**Connecticut 06805(US)**

(74) Representative: **Thomas, Roger Tamlyn et al,**
**D. Young & Co. 10 Staple Inn**
**London WC1V 7RD(GB)**

(54) Soft flavor chips containing dairy butterfat.

(57) Improved storage stable flavor chips and methods of making and using same are disclosed, said chips comprising sugar, fat, flavoring and a softening fat such as dairy butterfat. When said softening fat-containing chips are incorporated into baked goods such as cookies, they attain and maintain an increased degree of softness in comparison to conventionally formulated flavor chips.

EP 0 163 496 A2

SOFT FLAVOR CHIPS
CONTAINING DAIRY BUTTERFAT

Field of the Invention

The present invention relates to solid or semi-solid flavor chips utilized in the preparation of baked goods, such as cookies. More specifically, the invention relates to improved flavor chips incorporated into cookies, wherein said chips attain and maintain an increased degree of softness in comparison to conventional flavor chips.

Background of the Invention

Baked goods containing flavor chips such as chocolate chips, peanut butter, and butterscotch chips are well known in the art. These flavor chips, consisting primarily of sugar, fat and flavorings, are available in solid form which can be incorporated in conventional cookie doughs and the like, prior to baking.

During baking, conventional flavor chips contained in baked goods undergo a degree of melting and softening, and for a short period of time after baking the flavor chips, remain in a soft or semi-soft state. This soft texture of flavor chips in baked goods, particularly cookies, is a desirable attribute; however within a few days after baking, the chips begin to harden and can eventually become so hard that they appear stale.

Fresh, home-baked products, such as cookies, are generally consumed within a very short time after baking and therefore relatively rapid hardening of conventional flavor chips therein is not a serious problem. However in ready-to-serve cookies (i.e., baked cookies prepared by commercial manufacturers which are not consumed until long after they have been baked), conventional flavor chips often become undesirably hard long before they are consumed. This problem is particularly severe in ready-to-serve cookies which are deliberately formulated so as to remain soft or chewy for extended periods of time to resemble fresh-baked cookies. Where cookies of this type contain flavor chips, the above mentioned hardening of the chips significantly detracts from the otherwise "fresh-baked" nature of the cookie.

A number of attempts have been made by prior workers to develop flavor chips which retain a soft texture in baked goods over extended storage periods. Such flavor chips are hereinafter referred to as 'soft flavor chips'. Certain of these efforts have been directed to modification of the properties of the flavor chips themselves by addition of ingredients to make them softer than conventional chips. These efforts however have often been hampered by difficulties with respect to efficient handling of the soft flavor chips. For example, chips that are soft at room temperature and which retain their soft or semi-solid properties in baked goods for extended periods are known in the art. However, these chips are not suitable for many manufacturing operations because they are difficult to handle and package in bulk form and lose their structural integrity during their incorporation into cookie doughs. In addition, government-established standards of identity for certain flavor chips or components thereof may place restrictions on additional ingredients which can be employed while still producing a true flavor chip for labelling and advertising purposes. It is one object of the present invention to provide a storage stable flavor chip that maintains its structural integrity during handling and incorporation into a cookie dough, yet provides a desirable soft texture in the baked goods for extended periods of time.

Another proposed method for the preparation of flavor chip-containing baked goods in which the flavor chips retain a soft, semi-solid texture is to modify the dough or batter so as to achieve softening of the flavor chips in the resulting baked goods and retention thereof. See U.S. Patent No. 4,360,534 to William J. Brabbs, et al., issued November 23, 1982. According to the method of this patent, hereafter referred to as the shortening system method, flavor chip-containing cookie doughs are formulated to include both shortening which is fluid at normal cookie-storage temperatures and an emulsifier to render the dough system shortening-continuous. The patentees assert that in baked goods including conventional flavor chips prepared from their modified doughs, migration of the fluid shortening into the flavor chips after baking is enhanced causing the flavor chips to develop a stable, soft texture after a certain period of time. Where the Brabbs et al. method is employed, still further improvement in the softness of the flavor chips and storage stability thereof would be desirable.

Another method, hereafter referred to as the thermal conditioning method, for improving chip softness over extended periods without the aid of emulsifiers is disclosed in applicant's copending application, entitled "Method for Manufacturing Baked Goods Containing Soft Flavor Chips. The copending application discloses a process for manufacturing flavor chip-containing cookies wherein the flavor chips, although normally solid at ambient conditions develop a soft texture within baked products which is maintained during extended storage. This process relies upon maintaining freshly-baked flavor chip-containing cookies at temperatures of from about 20°C. to 50°C. for a predetermined period of time before returning the cookies to normal storage temperature conditions.

It is an object of the present invention to provide improved flavor chips that may be employed in various processes, including those described above to provide baked goods especially cookies having storage stable soft chips after baking, wherein said improved flavor chips attain and maintain an increased degree of softness in comparison to conventional flavor chips. Other objects of the invention will become apparent as the invention is further described.

Summary of the Invention

It has been discovered that storage stable flavor chips that can be conveniently handled at room temperatures may be prepared by including a softening fat such as dairy butter fat in a flavor chip composition comprising sugar, fat and flavoring. New bakable compositions, such as doughs or batters, may be prepared by including the storage stable chips of the present invention therein. The storage stable flavor chips in baked products produced from the foregoing bakable compositions have been found to have a desirable degree of softness that is maintained for extended periods of time.

### Detailed Description of the Invention

Generally the storage stable flavor chips of the present invention have the following composition:

| Ingredient | Percent by Wt. |
|---|---|
| Sugar | 45-75 |
| Flavoring | 10-20 |
| Fat | 23-33 |
| Softening Fat | 2-9 |

The term sugar, as used herein, means sweeteners typically used in baked goods and mixtures thereof examples of such sugars are sucrose, dextrose, fructose, levulose, corn syrups, and high fructose corn syrup. Sucrose is a preferred sugar because its crystal structure improves the structural integrity of chips containing large amounts thereof.

The term fat, as used herein, means solid or semiplastic materials or mixtures thereof including such materials as cocoa butter, fats produced from lauric acid fats by fractionation and hydrogenation such as coconut, palm and palm kernel oils; fats produced from domestic fats such as soy, corn and cotton seed oils by selective hydrogenation; or from palm kernel stearines by fractionation: fats produced from palm kernel oil by fractional crystallization; or from glycerol and selected fatty acids by direct chemical synthesis or from edible beef tallow by acetone crystallization.

The term flavoring, as used herein, means natural and synthetic materials and combinations thereof that impart taste and odor to the storage stable chips of the invention and includes essential oils, fruit and fruit juice, plant extracts and various other isolates from natural and synthetic materials, e.g., aldehydes ketones acids, esters, phenols, phenol ethers, lactones, organic derivatives of sulfur and aliphatic, aromatic and terpine alcohols and the like. Cocoa is a particularly preferred flavoring.

The term softening butterfat, as used herein, means a fat predominantly composed of mixed glycerides of saturated and unsaturated fatty acids preferably in the following approximate weight percentages: butyric, 3.5; caproic, 1.4 caprylic, 1.7: capric, 2.6 lauric, 4.5; myristic, 14.6; palmitic, 30.2; stearic, 10.5; longer chain saturated, 1.6 decenoic, 0.3 dodecenoic, 0.2; tetradecenoic, 1.5; hexadecenoic, 5.7; octadecenoic 18.7; octadececadienoic, 2.7 and longer-chain unsaturated, fatty acids 0.9.

Dairy butterfat is a preferred softening fat for producing storage stable flavor chips in accordance with the invention. It will be appreciated by those skilled in the art that the composition of dairy butterfat is subject to considerable variation due to climatic conditions or diet of the cows, etc.

Optional ingredients in flavor chip compositions of the present invention include emulsifiers, preservatives, colorants, and the like, which are well known in the art, e.g., lecithin is a typical emulsifier preferably used at concentrations of about 0.2 to 0.6 percent by weight. Lecithin is a naturally occurring phospholipid possessing both hydrophilic and hydrophobic properties. It is thought that lecithin reduces viscosity and surface tension between fats and other materials present by attaching itself to the water, sugar and fats present in the formulation.

## Description of Preferred Embodiments

A preferred embodiment of the present invention is storage stable chocolate chips which are prepared as follows:

| Ingredient | Percent by Weight |
|------------|-------------------|
| Sugar (sucrose) | 55.6 |
| Flavoring (cocoa powder) | 16.4 |
| Fat (cocoa butter fat) | 21.5 |
| Softening fat (dairy butterfat) | 6.0 |
| Lecithin | 0.375 |

The sugar, softening fat and lecithin are provided as hereinabove described. The cocoa flavoring and a portion of the cocoa butter fat are provided as a single ingredient known in the art as chocolate liquor.

Chocolate liquor is the solid or semiplastic food prepared by finely grinding the kernel or nib of cocoa beans. The typical cocoa butter, used in the formulations described herein, has a composition of about 53% cocoa butter fat and 47% cocoa powder having an average particle size of about 2-3 microns. It will be appreciated by those skilled in the art that the composition of chocolate liquor is subject to variations due to growing conditions, processing and the like, and that such variations may require modifications in the above formulation.

Cocoa butter may be prepared by separating the cocoa powder and cocoa butter fat described above. In the present formulation, about 3% wt. additional cocoa butter fat is added to adjust the total fat content, i.e. the sum of the cocoa butter fat, softening fat, and any additional fat(s), and to aid in mixing.

The above-listed ingredients were combined as follows: chocolate liquor and sugar were ground to a fine powder (2-5 micron average particle size) on a 3 or 5 roll vertical mill. More than half of the 3% wt. additional cocoa fat and some of the dairy butterfat were added to the ground mixture to increase its total fat content by about 3-4% by weight. This mixture was then dried on a conching machine maintained at about 60°C until substantially all of the moisture was removed.

The remaining cocoa butter fat and dairy butterfat were melted and admixed with the lecithin and then mixed with the ground dried mixture to complete the storage stable chip composition of the invention.

The completed mixture was then slowly cooled to a temperature slightly below the melting point of the cocoa butter, typically about 35°C. and deposited on a continuous belt in small globules at the rate of 2000 chips per pound. The chips (globules) were rapidly cooled to a temperature between 4.5 and 10°C. to fix the chips in their beta-prime crystalline phase. The storage stable chocolate chips produced in accordance with the foregoing method have sufficient structural integrity at room temperature that they may be conveniently handled and incorporated into various baking compositions without significant breakage or staining.

A dough in accordance with the present invention may be prepared by combining the following ingredients typically in the indicated ranges: flour (35-45%), water (7 13%), sugar (13-21%), whey (0-1.0%), leavening (0.2-1.4%), flavoring (0.1-10%), shortening (10-20%) and the storage stable flavor chips (1-30%) of the invention described above. Of course, it will be appreciated by those skilled in the art that the foregoing ranges of percentages are merely exemplary and that substantial variations therefrom are possible.

The term flour, as used herein, means any cereal grain or edible seed meal commuinuted to the degree required to insure adequate blending with other components of the formulation. Examples of such flours are wheat flour, corn flour, rye flour, corn starch, soy isolates and the like.

The quantity of water employed in this formulation is selected to impart sufficient fluidity to the cookie dough to permit it to be formed into suitable shapes, dropped onto baking pans or belts, etc. Any added water (as such, or as part of added ingredients such as eggs), together with moisture present in the flours, sugar syrups, shortening or flavor chips, should be such that; at the baking conditions conventionally employed in cookie baking, the moisture content of the final baked cookie product may be less than about 10% by weight, and preferably below about 6% by weight. In addition, the amount of water present in the formulation should provide a water activity ($A_w$) in the baked cookie product of from about 0.25 to 0.85. Water activity ($A_w$) means the ratio of the fugacity of water in the system under study to the fugacity of pure water.

The sugar component of the cookie formulation can consist of any number of mono-, di- or polysaccharides which will impart the desired degree of sweetness to the cookie. As is known in the art, the sugar component of the cookie formulation can be varied to achieve desired effects, e.g., crispiness, chewiness, or a combination thereof. For example, the sugar component can consist of sucrose or other sugars which are readily-crystallizable under typical baking conditions and at the water content and activity ($A_w$) for that cookie giving a crisp and dry product.

Alternatively, the sugar component can consist of at least some sugars which are crystallization-resistant or only slowly crystallizable at the conditions encountered during baking, in which case the final cookie product will have a chewy. moist texture.

The term readily crystallizable sugars, as used herein, means monosaccharides or disaccharides or mixtures thereof that spontaneously crystallize under conditions encountered in a particular baked product. Sucrose is a preferred readily crystallizable sugar because it spontaneously crystallizes at water activity levels $(A_w)$ from about 0.25 to 0.8. Readily crystallizable sugars may be mixed with other sugars without substantial loss of their crystallization properties as long as they comprise more than about 85% wt. of the mixture.

The term crystallization-resistant sugars, as used herein, means monosaccharides, disaccharides, or mixtures thereof, that crystallize substantially more slowly than sucrose under the same conditions. Under the conditions encountered in baked products mentioned above, crystallization-resistant sugars typically take from 1 to 6 months to crystallize. Preferred crystallization-resistant sugars include dextrose and fructose and other examples of such sugars are psicose, sorbose, tagatose, allose, altrose, mannose, gulose, idose, galactose, talose, maltose, lactose, glucose, maltose, invert sugar, honey. and high fructose corn syrup.

Mixtures of sugars including readily crystallizable sugars, containing at least 15% wt. crystallization-resistant sugar, such as, fructose, dextrose or mixtures thereof, crystallize slowly enough to be considered in the crystallization-resistant class.

A cookie having textural dichotomy, i.e., a crisp outside and chewy inside, may be prepared by taking advantage of the above-described crystallization properties of sugars as hereinafter described.

Whey, leavening, and flavorings are common baking ingredients and their uses are well known in the art.

The term shortening, as used herein, means animal, vegetable and synthetic fats, typically used in baked goods which may contain fats as hereinabove defined.

Generally, about 20-50% by weight of the overall shortening component of typical doughs may consist of a shortening which is fluid at storage temperatures of as low as about 10°C. to 15°C. Above such storage temperatures, of course, the shortening will remain fluid. These fluid shortenings are typically liquid glyceride oils which consist primarily of triglycerides. To remain liquid at lower temperatures, the shortening should contain a minimum amount of triglycerides having melting points higher than about 15°C. so as to limit the solids increase when the shortening is cooled. It is desirable that the shortening be chemically stable and resistant to oxidation during conventional shelf-storage periods and conditions.

Suitable shortenings (oils) may be derived from naturally occurring liquid glyceride oils such as cottonseed oil, soybean oil, safflower oil, corn oil, olive oil, coconut oil, peanut oil, rapeseed oil, sesame seed oil, sunflower seed oil, and mixtures thereof. Also suitable are liquid oil fractions from palm oil, lard and tallow obtained, for example, by graining or directed interesterification followed by separation of the oil. Oils predominating in triglycerides of unsaturated acids may need some hydrogenation to maintain flavor, but care should be taken not to greatly increase the amount of triglycerides melting at less than about 15°C. When oils are selected which have a larger amount of solids melting between 15°C. and 40°C. than is desirable, it may be necessary to separate out the solids. Refined and slightly hydrogenated soybean oil is thought to be especially suitable. Refined cottonseed oil is also suitable.

Fluid shortenings may also be a mixture of normally liquid shortening and normally solid shortenings, wherein the total aggregate mixture is fluid. Such fluid shortenings contain, for example, about 3-4% of fully hydrogenated soybean oil. They are pourable suspensions at 15°C and appear homogeneous and clear at temperatures of about 30-35°C. The remainder of the shortening component; e.g., about 50-80% of the total shortening may be any suitable edible fat or oil or mixture thereof which is solid at the storage temperatures encountered by the baked cookie. Typically, this material will consist of a plastic shortening, e.g., a mixture of partially hydrogenated soybean oil and fully hydrogenated palm or cottonseed oils.

An emulsifier such as lecithin may be added to the doughs of this invention. If desired, the emulsifier concentration may be high enough to produce a shortening continuous dough system. It will be appreciated that the above-mentioned ingredients, as well as baking and mixing conditions hereinafter described, may be varied in accordance with what is known in the art to produce a wide variety of baked products.

### Example

Three chocolate chip cookie doughs numbered 1, 2 and 3 were prepared each having a different shortening systems A, B and C.

0163496

-13-

Dough 1 had shortening system A comprising a partially hydrogenated soybean oil having 30% solids at 10°C and less than 1% solids at 40°C: and a melting point of about 37.7-41.0°C.

Dough 2 had shortening system B comprising 75% solid fat (partially hydrogenated soy and/or palm kernel oil); having 29% solids at 10°C and 7% solids at 40°C· and a melting point of 46°C; and 25% of a pourable shortening (partially hydrogenated soybean oil) having 7% solids at 10°C and 4% solids at 40°C. Dough 3 had shortening system C comprising 50% solid fat and 50% of the pourable each described above with reference to shortening B.

The composition of doughs 1, 2 and 3 were as follows:

## Table I
### Test Cookie Composition

| Ingredients | Percent by Weight |
| --- | --- |
| Water | 9.7 |
| Flour | 40.8 |
| Sugars | 16.9 |
| Whey | 0.4 |
| Leavening | 0.8 |
| Flavoring | 1.0 |
| Shortening System A | 16.4 |
| Shortening System B | 16.4 |
| Shortening System C | 16.4 |

Each of the doughs were prepared by (1) creaming the sugars, shortening, whey and flavoring for about 5 minutes at low speed with a standard bakery blender; (2) forming a solution of one-half of the leavening with water and blending it into the creamed mixture of step (1) over 3 minutes, and sifting in the flour and remainder of the leavening over 2 minutes with low speed blending.

Test samples of each of the doughs were prepared by adding 14% by weight chocolate chips of the present invention or conventional chocolate chips as more fully described above, over one minute with low speed blending.

The storage stable chocolate chips of the present invention are fully described above. The conventional chocolate chips used herein are of the same formula as the chips of the present invention except that they contain no softening·fat. The total fat content of conventional chocolate chips is adjusted to that of the storage stable chocolate chips by adding additional cocoa butter.

From above procedure six dough samples were produced comprising each of doughs 1, 2 and 3 combined with conventional chocolate chips or with chips of the present invention.

Cookies were formed from each of the six sample doughs by feeding the dough to a ribbon cutter forming 10 gram cookies approximately 2.375 by 0.375 inch in size.

The cookies were baked in a conventional baking oven having 5 heating zones with temperatures ranging from 140°C to 260°C.

The baked cookies were transferred to gas-impermeable aluminized paper bags, heat-sealed, and stored at about 21°C for 10 days to 4 weeks. The chips in a cookie prepared from each dough were quantitatively evaluated for texture by use of a penetrometer, specifically, a Micrometer Adjustment Penetrometer from Krebs Electric & Mfg. Co. of New York, New York  This testing involved the introduction of the penetrometer's standard needle probe for 10 seconds into 5 chips on the top and bottom of each cookie. An average reading in tenths of millimeters penetration was then calculated for chips on the top and on the bottom of each cookie. The higher the reading on the penetrometer was, the softer the chips were. The results of these tests are summarized in the following table.

The penetrometer measurements may be correlated with qualitative chip texture evaluations made by small panels of experts using conventional or standard chocolate chips as the standard for a hard chip and describing the texture of other chips with respect thereto. The conventional chocolate chips have the same formula as those of the present invention except that the softening or dairy butterfat is replaced by cocoa butterfat. The pentrometer measurements correlate with the experts evalutions as follows: hard, 0-8; firm, 9-16; moderately soft, 17-23; soft, 24-30: and very soft, 30 or more.

## Table II
### Cookie Chip Texture

A. Cookies with Chips according to the Present Invention

| Doughs | 10 days at 21°C #1 | #2 | #3 | 4 Weeks at 21°C #1 | #2 | #3 |
|---|---|---|---|---|---|---|
| Chips at cookie - top avg. penetrometer reading (mm) | 40.0 | 37.0 | 40.0 | 35.8 | 31.8 | 34.8 |
| Chips at cookie - bottom avg. penetrometer reading | 42.0 | 32.0 | 27.0 | 30.4 | 27.4 | 19.6 |

0163496

-16-

B.  Cookies with Standard Chips outside
    the Scope of the Invention

| Doughs | 10 days at 21°C | | | 4 Weeks at 21°C | | |
|---|---|---|---|---|---|---|
| | #1 | #2 | #3 | #1 | #2 | #3 |
| Chips at cookie - avg. penetrometer reading | 5.3 | 5.2 | 5.7 | 12.4 | 24.2 | 27.4 |
| Chips at cookie - bottom avg. penetrometer reading | 5.8 | 7.3 | 8.6 | 4.6 | 8.0 | 8.4 |

From the data appearing in the tables above, it is readily apparent that, regardless of the shortening system used in the doughs, i.e., solid shortening alone, or a combination of solid and liquid shortenings, the chip according to the present invention attained and maintained an increased degree of softness in comparison to the conventional flavor chips used in the same dough. Although chips according to the invention demonstrate enhanced softness regardless of the shortening system used, it was surprising and unexpected to discover that when a solid shortening alone was used (shortening system A), the improved chips showed the greatest degree of increased softness.

In alternative embodiments of the present invention, cookies having 'textural dichotomy' may be prepared by forming a cookie having discrete dough portions having sufficient concentrations of readily cyrstallizable sugars to form a crispy baked cookie portion and other dough portions having sufficient crystallization-resistant sugars to form a chewy baked cookie portion.

Alternatively, the chewy baked cookie portion may be prepared by adding an enzyme, such as amylase, to portions of the dough instead of or in combination with

-17-

crystallization resistant sugars.

While certain representative embodiments of the invention have been described for purposes of illustration, it will be apparent to those skilled in the art that modifications therein may be made without departing from the spirit and scope of the invention.

CLAIMS

1. A storage stable flavor chip comprising:
   sugar, fat, flavoring, and a suffficient quantity of softening fat to produce a soft storage stable chip when incorporated into a baked product.

2. The storage stable flavor chip recited in claim 1, wherein the proportions of ingredients are:
   45-75% wt. sugar; 23-33% wt. fat: 10-20% wt. flavorings; and 2-9% wt. softening fat.

3. A storage stable flavor chip, comprising:
   sugar about 55.6% wt.; fat about 21.5% wt.; flavoring about 16.4% wt.; softening about 6% wt.; and less than 0.6% emulsifier.

4. The storage stable flavor chip recited in claim 3, wherein:
   the sugar is sucrose the fat is cocoa butter fat, the flavoring is cocoa powder; the softening fat is dairy butterfat and the emulsifier is lecithin in the amount of about 0.375% wt.

5. The storage stable flavor chip recited in claim 4, wherein:
   the cocoa powder and a portion of the cocoa butter fats comprise, a single ingredient cocoa liquor.

6. The storage stable flavor chips recited in claim 2, wherein:
   the percent weight of the fat and softening fat taken together is between 25-35% wt.

7. The storage stable flavor chips recited in claim 2, wherein:

the percent weight of the fat and softening fat taken together is between 27-29% wt.

8. The storage stable flavor chip recited in claim 1, 2, 3, 4, 5, 6 or 7, wherein:
at least a portion of the sugar is a crystallization resistant sugar.

9. The storage stable flavor chip of claim 8, wherein:
the cryustalization resistant sugar is dextrose is about 2-7% wt. and fructose is about 0-1% wt. of the sugar.

10. A method for manufacturing storage stable chocolate chips, comprising:
grinding a mixture of chocolate liquor-containing cocoa butter fat and sugar until the average particle size is reduced to about 3-5 microns;
mixing additional cocoa butter fat and a softening fat with the ground mixture to increase the total fat content of the mixture by about 3-4% wt.;
drying the mixture at about 60°C until substantially all of the moisture is removed;
adding a melted mixture of additional fat, softening fat and an emulsifier to the dried mixture to complete the storage stable chip composition;
cooling the complete storage stable chip composition slowly to less than about 35°C;
forming chips of a desired size and shape;
rapidly cooling the formed chips to produce a solid chip having sufficient structural integrity to be incorporated into baked products without significant breakage.

11. The method for manufacturing storage stable chocolate chips recited in claim 10, wherein: the chocolate liquor comprises about 35% wt.; the sugar about 56% wt.; the additional cocoa butter is about 3% wt.; the softening fat is dairy butterfat in the amount of about 6% wt.; and the emulsifier is lecithin in the amount of about 0.375% wt.

12. A composition for preparing baked products, which comprises: a soft dough composed of flour 35-45% wt.; water 7-13% wt.; sugar 13-21% wt.; whey 0-1.0% wt.; leavening 0.2-1.4% wt.; flavoring 0.1-10% wt.; and shortening 10-20% wt.; and storage stable flavor chips comprising sugar, fat, flavoring and an effective amount of softening fat.

13. The compositon for preparing baked products recited in claim 12, wherein: the storage stable flavor chips are 45-75% wt. sugar; 10-20% wt. fat; 23-33% wt. flavoring; and 2-9% wt. softening fat.

14. The composition for preparing baked products recited in claim 12, wherein: the storage stable flavoring chips are about 55.6% wt. sugar; 21.5% wt. fat; 16.4% wt. flavoring; 6% wt. softening fat and further comprising less than about 0.6% wt. emulsifier.

15. The composition for preparing baked products recited in claim 14, wherein: the sugar is sucrose; the flavoring is cocoa powder; the softening fat is dairy butterfat and the emulsifier is lecithin in the amount of about 0.375% wt.

0163496

-21-

16. A baked product comprising:

a soft dough composed of flour 35-45% wt.; water 7-13% wt.; sugar 13-21% wt.; whey 0-1.0% wt.; leavening 0.2-1.4% wt.; flavoring 0.1-10% wt.; and shortening 1-30% wt.; and storage stable flavor chips comprising sugar, fat flavoring and an effective amount of softening fat.

17. The baked product recited in claim 16, wherein: the storage stable flavor chips are 45-75% wt. sugar; 10-20% wt. fat; 23-33% wt. flavoring· and 2-9% wt. softening fat.

18. The baked product recited in claim 16, wherein: the storage stable flavoring chips are about 55.6% wt. sugar; 21.5% wt. fat; 16.4% wt. flavoring; 6% wt. softening fat and further comprising less than about 0.6% wt. emulsifier.

19. The baked product recited in claim 18, wherein: the sugar is sucrose, the flavoring is cocoa powder; the softening fat is dairy butterfat and the emulsifier is lecithin in the amount of about 0.375% wt.